# EUROPÄISCHE PATENTSCHRIFT

(11) **EP 0 970 410 B1**
(45) Veröffentlichungstag und Bekanntmachung des Hinweises auf die Patenterteilung: **07.11.2001**
(21) Anmeldenummer: 98912490.4
(22) Anmeldetag: 19.03.1998
(51) Int. Cl.: G05D 23/13

(54) **THERMOSTATISCHER WASSERMISCHER**
THERMOSTATIC WATER MIXER
MELANGEUR HYDRAULIQUE THERMOSTATIQUE

(30) Priorität: 21.03.1997 DE 19711760
(43) Veröffentlichungstag der Anmeldung: 12.01.2000
(73) Patentinhaber: HONEYWELL AG, 63067 Offenbach am Main (DE)
(72) Erfinder: KNAUSS, Erwin, D-74831 Gundelsheim (DE)
(74) Vertreter: Fritz, Edmund Lothar, Dipl.-Chem.
(86) Internationale Anmeldenummer: EP9801612
(87) Internationale Veröffentlichungsnummer: WO9843142

(56) Entgegenhaltungen:
- WO-A-96/16362
- DE-C- 4 423 240
- FR-A- 2 295 327
- US-A- 3 955 759

## Beschreibung

Die vorliegende Erfindung bezieht sich auf einen thermostatischen Wassermischer nach dem Gattungsbegriff des Patentanspruches 1.

Derartige thermostatische Wassermischer sind bekannt und umfassen im allgemeinen zwei durch ein thermostatisches Dehnstoffelement gesteuerte Ventile. die den Eintritt jeweils von Kaltwasser und Heißwasser in einen Mischraum steuern, wobei das thermostatische Dehnstoffelement von dem Mischwasser umspült wird.

Bekannte Wassermischer dieser Art besitzen die Eigenschaft, daß eine eingestellte Sollwerttemperatur nur dann eingehalten wird, wenn die eingangsseitigen Drücke für Kaltwasser und Heißwasser keinen Schwankungen unterliegen. Eine von den Eingangsdrücken unabhängige Regelcharakteristik ist aber erwünscht. In dieser Hinsicht wird durch die DE 44 23 240 Cl eine Verbesserung vorgegeben, indem im Mischbereich eine Prallplatte angeordnet wird. Ausgehend von diesem Stand der Technik bezweckt die vorliegende Erfindung ein noch weiter verbessertes Regelverhalten.

Weiterhin zeigt das Dokument WO 96/16362 den einschlägigen Stand der Technik.

Die vorliegende Erfindung löst diese Aufgabe durch die kennzeichnenden Merkmale des Patentanspruches 1. Weitere vorteilhafte Ausgestaltungen des erfindungsgemäßen Wassermischers sind den abhängigen Ansprüchen entnehmbar.

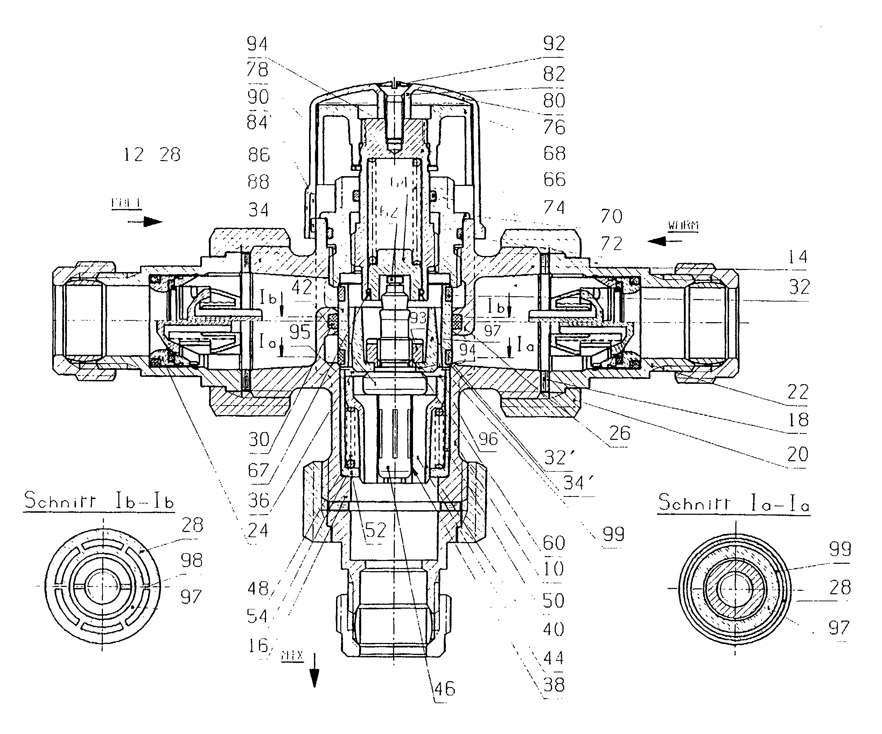

Anhand der einzigen Figur der beiliegenden Zeichnung sei im folgenden ein Ausführungsbeispiel des erfindungsgemäßen thermostatischen Wassermischers beschrieben. Gemäß dieser einzigen Figur umfaßt der thermostatische Wassermischer ein Gehäuse 10 mit einem Einlaß 12 für Kaltwasser und einem Einlaß 14 für Warmwasser. Das Mischwasser tritt an einem zu den Einlässen senkrecht stehenden Auslaß 16 aus. An den Ein- und Auslaß sind unter Zwischenfügung von Dichtringen 18 über Überwurfmuttern 20 Gewindetüllen 22 angeschraubt, in denen Rückflußverhinderer 24 angeordnet sind. In der Symmetrieebene der beiden Einlässe und Konzentrisch zu einer vertikalen Symmetrieachse ist an dem Gehäuse 10 ein Führungsring 26 angeformt, in welchem ein hülsenförmiger Schließkörper 28 abgedichtet durch einen O-Ring 30 geführt ist. Der Schließkörper 28 weist an beiden Enden Dichtringe 32. 32' (Weichdichtungen) auf, die mit Sitzen 34. 34' im Gehäuse 10 zusammenarbeiten. Das aus dem Dichtring 32 und dem Ventilsitz 34 gebildete Ventil steuert den Zutritt von Kaltwasser in einen Mischraum 36 und das aus dem Dichtring 32' und dem Ventilsitz 34' gebildete Ventil steuert den Zutritt von Warmwasser in diesen Mischraum 36.

Der Schließkörper 28 weist in seinem Innern einen konzentrisch angeordneten hülsenförmigen Innenkörper 97 aus Kunststoff auf. der im oberen Teil über Stege 98 (siehe Schnitt Ib-Ib) mit dem Schließkörper 28 verbunden ist. Im unteren Teil fehlen die Stege 98, so daß sich ein umlaufender Ringspalt 99 (siehe Schnitt Ia-Ia) ergibt. Dadurch. daß der Schliebkörper 28. die Stege 98 und der hülsenförmige Innenkörper 97 einstückig aus Kunststoff hergestellt werden, werden Kalkablagerungen vermieden und das kanalisierte Kaltwasser wird an einer Beeinflussung des Thermoelementes gehindert.

Im Mischraum 36 ist ein thermostatisches Dehnstoffelement 38 angeordnet. Das Dehnstoffelement 38 sitzt in einer Federhülse 40. wobei es sich mit einem im Durchmesser erweiterten Wulst 42 auf von der Federhülse 40 nach innen springenden achsparallelen Rippen 44 abstützt. Parallel zu dem Wulst 42 des Dehnstoffelementes 38 hat die Federhülse 40 einen Kragen 95. der mit seinem Abschlußbund eine Prallfläche 96 bildet. Diese Prallfläche 96 bewirkt. daß das über den Ringspalt 99 eintretende Kaltwasser mit dem über den Sitz 34' eintretenden Heißwasser verwirbelt und eng an dem Dehnstoffelement 38 vorbeigeführt wird. Die Innenkontur der Federhülse 40 verläuft parallel zu der Außenkante des Dehnstoffelementes 38. d.h. sie verjüngt sich im Übergangsbereich von dem Wulst 42 zu einem zylindrischen Teil 46 des Dehnstoffelementes 38. Die Federhülse 40 stützt sich über eine Druckfeder 48 an einem nach innen springenden Kragen 52 einer Kunststoffhülse 50 ab. die in das Gehäuse 10 von oben eingesetzt ist und sich an einer nach innen vorspringenden Schulter 54 des Gehäuses 10 abstützt. Der obere Rand der Kunststoffhülse 50 dient zugleich als Hubbegrenzung für den Schließkörper 28. Von oben ist auf den Wulst 42 des Dehnstoffelementes 38 der hulsenformige Innenkörper 97 mit einem nach innen ragenden Flanschkragen 94 aufgesetzt. Eine mit einem Außengewinde des Dehnstoffelementes 38 verschraubte Mutter 93 spannt den Flanschkragen 94 zwischen sich und dem Wulst 42 ein.

Das Dehnstoffelement 38 stützt sich mit einem nach oben herausragenden Stößel 62 an einem Druckstück 64 ab, das sich seinerseits über eine Druckfeder 66 in der Ausnehmung einer Spindel 68 abstützt. Das Druckstück 64 ist über einen Sprengring 67 in der Ausnehmung der Spindel 68 gehalten. Die Spindel 68 ist mit einem Außengewinde in einem Innengewinde einer Führungsbuchse 70 axial verstellbar, wobei die Führungsbuchse 70 in das Gehäuse 10 eingeschraubt und durch O-Ringe 72 und 74 gegen das Gehäuse 10 und die Spindel 68 abgedichtet ist.

Mit der Spindel 68 ist ein Rändelgriff 76 verschraubt und über einen Sicherungsring 78 axial gesichert. Über den Rändeigriff 76 wird die Sollwerttemperatur des Mischers eingestellt. Um eine unbefugte Verstellung der Sollwentemperatur zu verhindern. ist eine Kappe 80 vorgesehen, die aus durchsichtigem Kunststoff besteht und auf den Rändelgriff 76 aufgesetzt wird. Die Kappe 80 überragt den Rändelgriff 76, wobei sie sich mit einer zentralen Hülse 82 auf der Spindel 68 abstützt. Die Kappe 80 weist eine achsparallele Nut 84 am Innenumfang ihres Mantels 86 auf, welche Nut eine achsparallele Rippe 88 am Gehäuse 10 überstellt. Die Rippe 88 dient zugleich als Markierung für die Sollwerteinstellung mittels des Rändelgriffs 76, der eine entsprechende Skala trägt. Im Bereich der Nut 84 ist der Mantel 86 mit einer entsprechenden nach außen abstehenden Ausformung 90 versehen. Eine Senkschraube 92 greift in eine entsprechende Ausformung im Übergangsbereich zwischen der Kappe 80 und der Hülse 82 und zieht die Kappe 80 mit der Hülse 82 gegen die Spindel 68, wenn die Senkschraube 92 in ein entsprechendes zentrales Gewindeloch 94 in der Spindel 68 eingeschraubt wird. Selbstverständlich kann die Kappe 80 mit einer Rippe versehen sein, die in eine entsprechende Nut am Gehäuse 10 eingreift, um auf diese Weise eine Verdrehsicherung der Kappe zu bilden.

Aus dem vorstehend beschriebenen Aufbau ergibt sich folgende Wirkungsweise der beschriebenen Armatur.

Bei der Verwendung als Mischventil in Warmwasser- und Herzungsanlagen steuert das im Mischraum bzw. im Auslaß angeordnete hochempfindliche Dehnstoffelement den Schließkörper 28, der in Abhängigkeit von der Mischwassertemperatur den Zustrom von Kalt- bzw. Heißwasser regelt. Durch die an dem Schließkörper angeordneten Weichdichtungen erfolgt ein dichter Abschluß auf der Heißwasserseite bei Ausfall der Kaltwasserversorgung unter der Voraussetzung, daß die Heißwassertemperatur 10 K höher ist als die Mischwassertemperatur. Andererseits erfolgt bei Ausfall der Heißwasserversorgung eine Unterbrechung der Kaltwasserzufuhr.

Wenn der thermostatische Mischer als Verteilventil in Heizungsanlagen. insbesondere bei Fußbodenheizungen eingesetzt wird. so wird das Ventil im Vergleich zum Mischventil umgekehrt durchströmt und das Dehnstoffelement steuert den Schließkörper derart, daß bei Temperaturen größer als der Sollwert das Wasser zurück in die Heizungsanlage fließt und bei Temperaturen kleiner als der Sollwert das Wasser zum Heizkessel geleitet wird.

## Patentansprüche

1. Thermostatisch geregelter Wassermischer, aufweisend:
ein Gehäuse (10) mit
einem Einlaß (12) für Kaltwasser;
einem Einlaß (14) für Heißwasser; und
einem Auslaß (16) für Mischwasser, wobei die Ein- und Auslässe alle an eine Mischkammer (36) angeschlossen sind;
jeweils einem Ventilsitz (34,34') zwischen dem Einlaß für Kaltwasser und Heißwasser und der Mischkammer;
einem hülsenförmigen Schließkörper (28), der mit einem Dehnstoffelement (38) in Antriebsverbindung steht, das vom Mischwasser umströmt wird, wobei das Dehnstoffelement einen Wulst (42) aufweist;
mit einem Einstellelement (76) zur Verschiebung des Schließkörpers (28) zusammen mit dem Dehnstoffelement (38) zur Vorgabe eines Temperatur-Sollwertes; und
einem innerhalb des hülsenförmigen Sehließkörpers (28) und konzentrisch zu diesem angeordneten Innenkörper (97) zur Bildung eines Ringspaltes (99) für das Wasser und eine Prallfläche (96) gegenüber dem Ausgang des Ringspaltes (99) zum Fördern der Vermischung von Kalt- und Heißwasser,
**dadurch gekennzeichnet,**
**daß** das Dehnstoffelement (38) in einer Federhülse (40) angeordnet ist, die sich über einen Teil ihrer Länaserstreckung ausgehend von der Höhe des Wulstes (42) konisch verjüngt und über nach innen springende achsparaliele Rippen (44) das Dehnstoffelement (38) trägt, wobei
die Innenkontur der Federhülse (40) der Außenkontur des Dehnstoffelementes (38) angepaßt ist und zu dieser im wesentlichen parallel verläuft, daß die Prallfläche (96) durch die Stirnfläche der Federhülse (40) vorgegeben ist, und
**daß** die Federhülse (40) in einer Kunststoffhülse (50) geführt ist, wobei sich eine Druckfeder (48) zwischen der Federhülse (40) und der Kunststoffhülse (50) abstützt.

2. Thermostatisch geregelter Wassermischer nach Anspruch 1, **dadurch gekennzeichnet, daß** der obere Rand der Kunststoffhülse als Hubbegrenzung für den Schließkörper (28) dient.

3. Thermostatisch geregelter Wassermischer nach Anspruch 2, **dadurch gekennzeichnet, daß** der Schließkörper als Schiebehülse (28) ausgebildet ist. die im Sitzbereich jeweils mit eingelegten Weichdichtungen (32, 32') versehen ist.

4. Thermostatisch geregelter Wassermischer nach Anspruch 3, **dadurch gekennzeichnet, daß** das Dehnstoffelement (38) einen im Durchmesser erweiterten Wulst (42) aufweist, an dem der hühlsenförmige Innenkörper (97) mit einem nach innen ragenden Flanschkragen (94) zur Anlage gelangt. und eine mit einem Außengewinde am Dehnstoffelement zusammenwirkende Mutter (93) den Flanschkragen (94) zwischen sich und dem Wulst (42) einspannt.

5. Thermostatisch geregelter Wassermischer nach einem der Ansprüche 1 bis 4, **gekennzeichnet durch** einen Betrieb als Verteilventil mit einer Zuführung des Mediums am Mischanschluß und eine Verbindung des Kaltwasseranschlusses und des Heizwasseranschlusses mit einer Wärmequelle.

## Claims

1. Thermostatic controlled water mixer with:
a case (10), an inflow (12) for cold water, an inflow (14) for hot water; and an outflow (16) for mixed water, with the in- and outflows being connected to a mixer chamber (36); a valve (34) between each inflow for cold and hot water and the mixer chamber; a case-shaped closing body (28), which provides a drive connection with an extension element (38) and is surrounded by the mixed water with the extension element comprising a bead (42) and an adjusting element (76) for shifting the closing body (28) together with the extension element (38) to fix a temperature set value; and an inner body (97), which is arranged inside the case-shaped closing body (28) and concentric in respect thereto, to form an annular water passage (99) and a baffle-plate (96) in front of the outflow of the annular passage to promote the mixing-process of cold and hot water, **characterized in that** the extension element (38) is situated in a spring case (40), which tapers conically in its longitudinal extension beginning at the height of the bead (42) and supporting via intruding axle-parallel fins (44) the extension element (38), with the inner edge of the spring case (40) adapting to the outer edge of the extension element (38) and proceeding thereto nearly parallel, and **characterized in that** the baffle-plate (96) is preset by the front surface of the spring case (40), and **in that** the spring case (40) is introduced into a plastic case (50), with the compression spring (48) supporting itself between the spring case (40) and the plastic case (50).

2. Thermostatic controlled water mixer according to Claim 1, **characterized in that** the upper edge of the plastic case is used as stroke delimitation for the closing body (28).

3. Thermostatic controlled water mixer according to Claim 2, **characterized in that** the closing bodies are formed as shift-case (28) which, in their position range, are provided with flexible sealing rings (32).

4. Thermostatic controlled water mixer according to Claim 3, **characterized in that** the extension element (38) presents a flange (42) with a widened diameter, reaching in its installation the case-shaped inner body (97) via an intruding flange edge (94), and a nut (9), which acts in combination with the external thread in the extension element, and which clamps the flange edge (94) between the flange (42) and itself.

5. Thermostatic controlled water mixer according to either of Claims 1 to 4, **characterized in that** a valve during the operation is a distribution valve with an inlet for the medium into the mix-supply and a connection of the cold and hot water supply with a heat source.

## Revendications

1. Mélangeur hydraulique thermostatique réglé, comprenant :
un boîtier (10) avec
une entrée (12) pour l'eau froide ;
une entrée pour l'eau chaude, et
une sortie (16) pour l'eau mélangée, où la totalité des entrées et des sorties sont connectées avec une chambre de mélange (36) ;
un siège de soupape (34, 34') entre chaque entrée pour l'eau froide et l'eau chaude et la chambre de mélange ;
un corps de fermeture ayant une forme de revêtement (28), lequel pourvoit une liaison de transmission avec un élément en matière expansible, entouré par l'eau mélangée, où l'élément en matière extensible comprend un bourrelet (42) ;
avec un élément de réglage (76) pour le déplacement du corps de fermeture (28) avec un élément en matière extensible (38) pour fixer la valeur de température prescrite; et
sur la partie intérieure du corps de fermeture ayant une forme de revêtement (28) est disposé un corps intérieur (97) concentrique para rapport à celui-ci pour former un annulaire (99) pour l'eau et une plaque de déviation (96) face à la sortie du passage annulaire pour favoriser le croisement de l'eau froide et de l'eau chaude,
**caractérisé en ce que,**
l'élément en matière expansible (38) est situé sur un support de ressort (40), lequel se rétrécit de façon conique sur son extension longitudinale en commençant par la partie supérieure du bourrelet (42) et il supporte vers l'intérieur des nervures (44) parallèles par rapport à l'axe, où
le contour intérieur du support de ressort (40) s'adapte au contour extérieur de l'élément en matière expansible (38) en évoluant par rapport à celui-ci de façon parallèle, et où la plaque de déviation (96) est prédéterminée sur la surface frontale du support de ressort (40), et
**en ce que** le support du ressort (40) est conduit dans un support en matière plastique (50), où un ressort de compression (48) se supporte soi-même entre le support du ressort (40) et le support en plastique (50).

2. Mélangeur hydraulique thermostatique réglé selon la revendication 1, **caractérisé en ce que** la partie supérieure du support en matière plastique est utilisée comme délimitation de course pour le corps de fermeture (28).

3. Mélangeur hydraulique thermostatique réglé selon la revendication 2, **caractérisé en ce que,** le corps de fermeture est formé comme un support de déplacement (28) lequel, dans sa région de siège, est pourvu avec des bagues d'étanchéité (32, 32').

4. Mélangeur hydraulique thermostatique réglé selon la revendication 3, **caractérisé en ce que** l'élément en matière expansible (38) présente un bourrelet (42) ayant un diamètre élargit auquel, le corps intérieur en forme de support (97) moyennant une bague d'étanchéité intérieure (94) accède au dispositif, et un écrou (93) agissant en combinaison avec un filet extérieur à l'élément d'expansion serre la bague d'étanchéité (94) entre le bourrelet (42) et lui-même.

5. Mélangeur hydraulique thermostatique réglé selon la revendication de 1 à 4, **caractérisé par** un fonctionnement comme bourrelet de distribution avec une conduite du moyen au raccord de mixage et une connexion des raccords de l'eau froide et de l'eau chaude avec une source de chaleur.
